(19) Europäisches Patentamt
European Patent Office
Office européen des brevets

(11) EP 1 272 551 B2

(12) # NEUE EUROPÄISCHE PATENTSCHRIFT

Nach dem Einspruchsverfahren

(45) Veröffentlichungstag und Bekanntmachung des Hinweises auf die Entscheidung über den Einspruch:
**01.10.2008 Patentblatt 2008/40**

(45) Hinweis auf die Patenterteilung:
**24.03.2004 Patentblatt 2004/13**

(21) Anmeldenummer: **01913744.7**

(22) Anmeldetag: **11.01.2001**

(51) Int Cl.:
***C08J 5/18*** *(2006.01)* ***B29D 7/01*** *(2006.01)*
***B32B 27/18*** *(2006.01)* ***C08J 3/22*** *(2006.01)*

(86) Internationale Anmeldenummer:
**PCT/EP2001/000274**

(87) Internationale Veröffentlichungsnummer:
**WO 2001/053395 (26.07.2001 Gazette 2001/30)**

(54) **WEISSE, SCHWERENTFLAMMBARE, UV-STABILE FOLIE AUS EINEM KRISTALLISIERBAREN THERMOPLASTEN, VERFAHREN ZU IHRER HERSTELLUNG UND IHRE VERWENDUNG**

WHITE FLAME-RESISTANT UV-STABLE FILM MADE FROM A CRYSTALLISABLE THERMOPLASTIC, A METHOD FOR PRODUCTION AND THE USE THEREOF

FEUILLE BLANCHE, DIFFICILEMENT INFLAMMABLE, STABLE AUX UV, CONSTITUEE D'UNE MATIERE THERMOPLASTIQUE CRISTALLISABLE, SON PROCEDE DE PRODUCTION ET SON UTILISATION

(84) Benannte Vertragsstaaten:
**DE FR GB IT LU NL**

(30) Priorität: **20.01.2000 DE 10002163**

(43) Veröffentlichungstag der Anmeldung:
**08.01.2003 Patentblatt 2003/02**

(73) Patentinhaber: **Mitsubishi Polyester Film GmbH
65203 Wiesbaden (DE)**

(72) Erfinder:
- **MURSCHALL, Ursula
55283 Nierstein (DE)**
- **STOPP, Andreas
55218 Ingelheim (DE)**
- **CRASS, Günther
65232 Taunusstein (DE)**
- **KERN, Ulrich
55218 Ingelheim (DE)**

(74) Vertreter: **Schweitzer, Klaus et al
Zounek Plate Schweitzer
Patentanwaltskanzlei
Rheingaustrasse 196
65203 Wiesbaden (DE)**

(56) Entgegenhaltungen:

| | |
|---|---|
| **EP-A- 0 338 434** | **WO-A1-98/06575** |
| **WO-A1-98/06587** | **WO-A1-98/07068** |
| **GB-A- 2 344 596** | **JP-A- 679 846** |
| **JP-A- 1 101 021** | **JP-A- 1 237 137** |
| **JP-A- 1 264 843** | **JP-A- 5 279 494** |
| **JP-A- 6 344 525** | **JP-A- 7 100 981** |
| **JP-A- 7 101 011** | **JP-A- 7 101 020** |
| **JP-A- 7 101 022** | **US-A- 3 900 444** |
| **US-A- 4 081 463** | **US-A- 4 104 259** |
| **US-A- 4 169 935** | **US-A- 4 278 065** |
| **US-A- 5 147 912** | **US-A- 5 708 065** |

- **"ADDITIVES" PLASTICS ENGINEERING, SOCIETY OF PLASTICS ENGINEERS,INC. GREENWICH, CONN,US, Bd. 55, Nr. 6, Juni 1999 (1999-06), Seiten 32-38, XP000998046 ISSN: 0091-9578**
- **"FLAMMSCHUTZADDITIVE DER CONSTAB POLYMER-CHEMIE" GUMMI, FASERN, KUNSTSTOFFE. INTERNATIONALE FACHZEITSCHRIFT FUR DIE POLYMER-VERARBEITUNG,GENTNER VERLAG. STUTTGART,DE, Bd. 48, Nr. 10, Oktober 1995 (1995-10), Seiten 695-697, XP000993091 ISSN: 0176-1625**
- **TINUVIN 1577 FF provisional. Product Information der Ciba AG**



Printed by Jouve, 75001 PARIS (FR)

## Beschreibung

Die Erfindung betrifft eine weiße, schwerentflammbare, UV-stabile, orientierte Folie aus einem kristallisierten Thermoplasten, deren Dicke im Bereich von 10 μm bis 300 μm liegt. Die Folie enthält mindestens ein Weißpigment und ein Flammschutzmittel und einen UV-Absorber und zeichnet sich durch eine gute Verstreckbarkeit, durch sehrgute optische und mechanische Eigenschaften und durch eine wirtschaftliche Herstellung aus. Die Erfindung betrifft ferner ein Verfahren zur Herstellung dieser Folie und ihre Verwendung.

Weiße, orientierte Folien aus kristallisierbaren Thermoplasten mit einer Dicke von 10 bis 300 μm sind hinreichend bekannt.

Diese Folien enthalten keinerlei UV-Absorber als Lichtschutzmittel und keinerlei Flammschutzmittel, so dass sich weder die Folien noch die daraus hergestellten Artikel für Außenanwendungen, wo ein Brandschutz bzw. eine Schwerentflammbarkeit gefordert ist, eignen. Die Folien erfüllen nicht die Brandtests nach DIN 4102 Teil 2 und Teil 1 sowie den UL-Test 94.

Bei Außenanwendungen zeigen diese Folien bereits nach kurzer Zeit eine Vergilbung und eine Verschlechterung der mechanischen Eigenschaften infolge eines photooxidativen Abbaus durch Sonnenlicht.

In der EP-A-0 620 245 sind Folien beschrieben, die hinsichtlich ihrer thermischen Stabilität verbessert sind. Diese Folien enthalten Antioxidationsmittel, welche geeignet sind, in der Folie gebildete Radikale abzufangen und gebildetes Peroxid abzubauen.

Ein Vorschlag, wie die UV-Stabilität solcher Folien zu verbessern sei, ist dieser Schrift jedoch nicht zu entnehmen.

In der DE-A 2 346 787 ist ein schwerentflammbarer Rohstoff beschrieben. Neben dem Rohstoff ist auch die Verwendung des Rohstoffs zu Folien und Fasern beschrieben.

Bei der Herstellung von Folien aus diesem phospholanmodifizierten Rohstoff zeigten sich folgende Defizite:

Der Rohstoff ist sehr hydrolyseempfindlich und muß sehr gut vorgetrocknet werden. Beim Trocknen des Rohstoffes mit Trocknern, die dem Stand der Technik entsprechen, verklebt der Rohstoff, so dass nur unter schwierigsten Bedingungen eine Folie herstellbar ist.

Die unter extremen und unwirtschaftlichen Bedingungen hergestellten Folien verspröden bei Temperaturbelastungen, d. h. die mechanischen Eigenschaften gehen aufgrund der Versprödung stark zurück, so dass die Folie unbrauchbar ist. Bereits nach 48 Stunden Temperaturbelastung tritt diese Versprödung auf.

Aufgabe der vorliegenden Erfindung war es, eine weiße, flammhemmend ausgerüstete, UV-stabile, orientierte Folie mit einer Dicke von 10 - 300 μm bereitzustellen, die neben einer wirtschaftlichen Herstellung, einer guten Verstreckbarkeit und guten mechanischen sowie optischen Eigenschaften, vor allem eine flammhemmende Wirkung, keine Versprödung nach Temperaturbelastung und eine hohe UV-Stabilität aufweist.

Eine flammhemmende Wirkung bedeutet, dass die weiße Folie in einer sogenannten Brandschutzprüfung die Bedingungen nach DIN 4102 Teil 2 und insbesondere die Bedingungen nach DIN 4102 Teil 1 erfüllt und in die Baustoffklasse B 2 und insbesondere B1 der schwer entflammbaren Stoffe eingeordnet werden kann.

Des Weiteren soll die Folie den UL-Test 94 "Vertical Buming Test for Flammability of Plastic Material" bestehen, so dass sie in die Klasse 94 VTM-0 eingestuft werden kann. Das bedeutet, dass die Folie 10 Sekunden nach Wegnahme des Bunsenbrenners nicht mehr brennt, nach 30 Sekunden kein Glühen beobachtet wird und auch kein Abtropfen festgestellt wird.

Eine hohe UV-Stabilität bedeutet, dass die Folien durch Sonnenlicht oder andere UV-Strahlung nicht oder nur extrem wenig geschädigt werden, so dass sich die Folien für Außenanwendungen und/oder kritische Innenanwendungen eignen. Insbesondere sollen die Folien bei mehrjähriger Außenanwendungen nicht vergilben, keine Versprödungen oder Rißbildung der Oberfläche zeigen und auch keine Verschlechterung der mechanischen Eigenschaften aufweisen. Hohe UV-Stabilität bedeutet demnach, dass die Folie das UV-Licht absorbiert und Licht erst im sichtbaren Bereich durchlässt.

Zu den guten optischen Eigenschaften zählen beispielsweise eine homogene Einfärbung, ein hoher Oberflächenglanz (> 15), eine niedrige Lichttransmission (< 70 %) sowie eine im Vergleich zur flammschutz- und UV-ausgerüsteten Folie unveränderte Gelbwert.

Zu den guten mechanischen Eigenschaften zählen unter anderem ein hoher E-Modul ($E_{MD}$> 3200 N/mm$^2$; $E_{TD}$ > 3500 N/mm$^2$) sowie gute Reißfestigkeitswerte (in MD > 100 N/mm$^2$; in TD > 130 N/mm$^2$).

Zu der guten Verstreckbarkeit zählt, dass sich die Folie bei ihrer Herstellung sowohl in Längs- als auch ich Querrichtung hervorragend und ohne Abrisse orientieren läßt.

Zu der wirtschaftlichen Herstellung zählt, dass die Rohstoffe bzw. die Rohstoffkomponenten, die zur Herstellung der schwer entflammbaren Folie benötigt werden, mit handelsüblichen Industrietrocknern, wie Vakuumtrockner, Wirbelschichttrockner,

Fließbetttrockner oder Festbetttrockner (Schachttrockner), getrocknet werden können. Wesentlich ist, dass die Rohstoffe nicht verkleben und nicht thermisch abgebaut werden. Diese Trockner arbeiten bei Temperaturen zwischen

100 und 170 °C, wo die flammhemmend ausgerüsteten Rohstoffe die Trockner bzw. Extruder so zusetzen, dass die verkohlte Masse herausgebrochen werden muß, so dass keine Folienherstellung möglich ist.

Bei dem am schonendsten trocknenden Vakuumtrockner durchläuft der Rohstoff einen Temperaturbereich von ca. 30 °C bis 130 °C bei einem Vakuum von 50 mbar. Danach ist ein sog. Nachtrocknen in einem Hopper bei Temperaturen von 100 - 130 °C und einer Verweilzeit von 3 bis 6 Stunden erforderlich. Selbst hier verkleben die nach dem Stand der Technik hergestellten flammhemmend ausgerüsteten Rohstoffe extrem.

Keine Versprödungen bei kurzer Temperaturbelastung bedeutet, dass die Folie nach 100 Stunden Tempervorgang bei 100 °C in einem Umluftofen keine Versprödung und keine schlechten mechanischen Eigenschaften aufweist.

Gelöst wird diese Aufgabe durch eine weiße Folie mit einer Dicke im Bereich 10 - 300 μm, die als Hauptbestandteil einen kristallisierbaren Thermoplasten enthält und dadurch gekennzeichnet ist, dass die Folie mindestens ein Weißpigment und mindestens einen UV-Absorber und mindestens ein Flammschutzmittel enthält, wobei der UV-Absorber zweckmäßigerweise und das Flammschutzmittel erfindungsgemäß als Masterbatch bei der Folienherstellung direkt zudosiert werden.

Die weiße Folie enthält als Hauptbestandteil einen kristallisierbaren Thermoplasten. Geeignete kristallisierbare bzw. teilkristalline Thermoplasten sind beispielsweise Polyethylenterephthalat, Polybutylenterephthalat, Polyethylennaphthalat, wobei Polyethylenterephthalat bevorzugt ist.

Erfindungsgemäß versteht man unter kristallisierbaren Thermoplasten kristallisierbare Homopolymere, kristallisierbare Copolymere, kristallisierbare Compounds (Mischungen), kristallisierbares Rezyklat und andere Variationen von kristallisierbaren Thermoplasten.

Die weiße Folie kann sowohl einschichtig als auch mehrschichtig sein. Die weiße Folie kann ebenfalls mit diversen Beschichtungsmitteln wie Copolyestem oder Haftvermittlern beschichtet sein.

Die weiße Folie enthält mindestens einen UV-Absorber und ein Flammschutzmittel und zwecks homogener Einfärbung mindestens ein Weißpigment. Der UV-Absorber wird zweckmäßigerweise über die sogenannte Masterbatch-Technologie direkt bei der Folienherstellung zudosiert, wobei die Konzentration des UV-Stabilisators vorzugsweise zwischen 0,01 Gew.-% und 5 Gew.-% bezogen auf das Gewicht der Schicht des kristallisierbaren Thermoplasten liegt.

Das Flammschutzmittels wird erfindungsgemäß über die sogenannte Masterbatch-Technologie direkt bei der Folienherstellung zudosiert, wobei die Konzentration zwischen 0,5 und 30 Gew.-%, vorzugsweise zwischen 1 und 20 Gew.-%, bezogen auf das Gewicht der Schicht des kristallisierbaren Thermoplasten, liegt.

Das Weißpigment wir ebenfalls bevorzugt über die Masterbatch-Technologie zudosiert, kann aber auch direkt beim Rohstoffhersteller eingearbeitet werden. Die Konzentration des Weißpigments liegt zwischen 0,2 Gew.-% und 40 Gew.-%, vorzugsweise zwischen 0,5 Gew.-% und 25 Gew.-%, bezogen auf das Gewicht des kristallisierbaren Thermoplasten.

Geeignete Weißpigmente sind vorzugsweise Titandioxid, Bariumsulfat, Calciumcarbonat, Kaolin, Siliciumdioxid, wobei Titandioxid und Bariumsulfat bevorzugt sind.

Die Titandioxidteilchen können aus Anatas oder Rutil bestehen, vorzugsweise überwiegend aus Rutil, welcher im Vergleich zu Anatas eine höhere Deckkraft zeigt. In bevorzugter Ausführungsform bestehen die Titandioxidteilchen zu mindestens 95 Gew.-% aus Rutil. Sie können nach einem üblichen Verfahren, z. B: nach dem Chlorid- oder dem Sulfat-Prozeß, hergestellt werden. Ihre Menge in der Basisschicht beträgt 0,3 - 25 Gew.-%, bezogen auf die Basisschicht, die mittlere Teilchengröße ist relativ klein und liegt vorzugsweise im Bereich von 0,10 bis 0,30 μm.

Durch Titandioxid der beschriebenen Art entstehen innerhalb der Polymermatrix keine Vakuolen während der Folienherstellung.

Die Titandioxidteilchen können einen Überzug aus anorganischen Oxiden besitzen, wie er üblicherweise als Überzug für $TiO_2$-Weißpigment in Papieren oder Anstrichmitteln zur Verbesserung der Lichtechtheit eingesetzt wird.

$TiO_2$ ist bekanntlich fotoaktiv. Bei Einwirkung von UV-Strahlen bilden sich freie Radikale auf der Oberfläche der Partikel. Diese freien Radikale können zu den filmbildenden Polymeren wandern, was zu Abbaureaktionen und Vergilbung führt. Zu den besonders geeigneten Oxiden gehören die Oxide von Aluminium, Silicium, Zink oder Magnesium oder Mischungen aus zwei oder mehreren dieser Verbindungen. $TiO_2$-Partikel mit einem Überzug aus mehreren dieser Verbindungen werden z. B. in der EP-A-0 044 515 und EP-A-0 078 633 beschrieben. Weiterhin kann der Überzug organische Verbindungen mit polaren und unpolaren Gruppen enthalten. Die organischen Verbindungen müssen bei der Herstellung der Folie durch Extrusion der Polymerschmelze ausreichend thermostabil sein. Polare Gruppen sind beispielsweise -OH; -OR; -COOX; (X = R; H oder Na, R = Alkyl mit 1 - 34 C-Atomen). Bevorzugte organische Verbindungen sind Alkanole und Fettsäuren mit 8 - 30 C-Atomen in der Alkylgruppe, insbesondere Fettsäuren und primäre n Alkanole mit 12 - 24 C-Atomen, sowie Polydiorganosiloxane und/oder Polyorganhydrogensiloxane wie z. B. Polydimethylsiloxan und Polymethylhydrogensiloxan.

Der Überzug der Titandioxidteilchen besteht gewöhnlich aus 1 bis 12, insbesondere 2 bis 6g anorganischen Oxiden und 0,5 bis 3, insbesondere 0,7 bis 1,5 g organischen Verbindungen, bezogen auf 100g Titandioxidteilchen. Der Überzug wird auf die Teilchen in wässriger Suspension aufgebracht. Die anorganischen Oxide werden aus wasserlöslichen Verbindungen, z. B. Alkali-, insbesondere Natriumnitrat, Natriumsilikat (Wasserglas) oder Kieselsäure in der

wässrigen Suspension ausgefällt.

Unter anorganischen Oxiden wie $Al_2O_3$ oder $SiO_2$ sind auch die Hydroxide oder deren verschiedene Entwässerungsstufen wie z. B. Oxidhydrat zu verstehen, ohne dass man deren genaue Zusammensetzung und Struktur erkennt. Auf das $TiO_2$-Pigment werden nach dem Glühen und Mahlen in wässriger Suspension die Oxidhydrate z. B. des Aluminiums und/oder Siliciums gefällt, die Pigmente dann gewaschen und getrocknet. Diese Ausfällung kann somit direkt in einer Suspension geschehen, wie sie im Herstellungsprozess nach der Glühung und der sich anschließenden Naßmahlung anfällt. Die Ausfällung der Oxide und/oder Oxidhydrate der jeweiligen Metalle erfolgt aus den wasserlöslichen Metallsalzen im bekannten pH-Bereich, für das Aluminium wird beispielsweise Aluminiumsulfat in wässriger Lösung (pH kleiner 4) eingesetzt und durch Zugabe von wässriger Ammoniaklösung oder Natronlauge im pH-Bereich zwischen 5 und 9, vorzugsweise zwischen 7 und 8,5, das Oxidhydrat gefällt. Geht man von einer Wasserglas- oder Alkalialuminatlösung aus, sollte der pH-Wert der vorgelegten $TiO_2$-Suspension im stark alkalischen Bereich (pH größer 8) liegen. Die Ausfällung erfolgt dann durch Zugabe von Mineralsäure wie Schwefelsäure im pH-Bereich 5 bis 8. Nach der Ausfällung der Metalloxide wird die Suspension noch 15 min bis etwa 2 Stunden gerührt, wobei die ausgefällten Schichten eine Alterung erfahren. Das beschichtete Produkt wird von der wässrigen Dispersion abgetrennt und nach dem Waschen bei erhöhter Temperatur, insbesondere bei 70 bis 100 °C, getrocknet.

Licht, insbesondere der ultraviolette Anteil der Sonnenstrahlung, d. h. der Wellenlängenbereich von 280 bis 400 nm, leitet bei Thermoplasten Abbauvorgänge ein, als deren Folge sich nicht nur das visuelle Erscheinungsbild infolge von Farbänderung bzw.

Vergilbung ändert, sondern auch die mechanisch-physikalischen Eigenschaften negativ beeinflusst werden.

Die Inhibierung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360 nm UV-Licht zu absorbieren, ihre Absorption nimmt unterhalb von 320 nm beträchtlich zu und ist unterhalb von 300 nm sehr ausgeprägt. Die maximale Absorption liegt zwischen 280 und 300 nm.

In Gegenwart von Sauerstoff werden hauptsächlich Kettenspaltungen, jedoch keine Vernetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in $\alpha$-Stellung der Estergruppen zu Hydroperoxiden und deren Zersetzungsprodukten sowie zu damit verbundenen Kettenspaltungen führen (H. Day, D. M. Wiles: J. Appl. Polym. Sci 16, 1972, Seite 203).

UV-Stabilisatoren bzw. UV-Absorber als Lichtschutzmittel sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für transparente Folien ungeeignet, da sie zur Verfärbung oder Farbänderung führen. Für transparente, matte Folien sind nur organische und metallorganische Verbindungen geeignet, die dem zu stabilisierenden Thermoplasten keine oder nur eine extrem geringe Farbe oder Farbänderung verleihen, d. h. die in dem Thermoplasten löslich sind.

Im Sinne dervorliegenden Erfindung geeignete UV-Stabilisatoren als Lichtschutzmittel sind UV-Stabilisatoren, die mindestens 70 %, vorzugsweise 80 %, besonders bevorzugt 90%, des UV-Lichtes im Wellenlängenbereich von 180 nm bis 380 nm, vorzugsweise 280 bis 350 nm absorbieren. Diese sind insbesondere geeignet, wenn sie im Temperaturbereich von 260 bis 300 °C thermisch stabil sind, d. h. sich nicht zersetzen und nicht zur Ausgasung führen. Geeignete UV-Stabilisatoren als Lichtschutzmittel sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und Triazine, wobei die 2-Hydroxybenzotriazole und die Triazine bevorzugt sind.

Der oder die UV-Stabilisatoren sind vorzugsweise in der/den Deckschichten enthalten. Bei Bedarf kann auch die Kernschicht mit UV-Stabilisator ausgerüstet sein.

Es war völlig überraschend, dass der Einsatz der oben genannten UV-Stabilisatoren in Folien zu dem gewünschten Ergebnis führte. Der Fachmann hätte vermutlich zunächst versucht, eine gewisse UV-Stabilität über ein Antioxidanz zu erreichen, hätte jedoch bei Bewitterung festgestellt, dass die Folie schnell gelb wird.

Vor dem Hintergrund, dass UV-Stabilisatoren das UV-Licht absorbieren und somit Schutz bieten, hätte der Fachmann wohl handelsübliche Stabilisatoren eingesetzt. Dabei hätte er festgestellt, dass

- der UV-Stabilisator eine mangelnde thermische Stabilität hat und sich bei Temperaturen zwischen 200 °C und 240 °C zersetzt und ausgast;
- er große Mengen (ca. 10 bis 15 Gew.-%) UV-Stabilisator einarbeiten muß, damit das UV-Licht absorbiert wird und damit die Folie nicht geschädigt wird.

Bei diesen hohen Konzentrationen hätte er festgestellt, dass die Folie schon nach der Herstellung gelb ist, bei Gelbwertunterschieden (YID) um die 25. Des Weiteren hätte er festgestellt, dass die mechanischen Eigenschaften negativ beeinflusst werden. Beim Verstrecken hätte er ungewöhnliche Probleme bekommen wie

- Abrisse wegen mangelnder Festigkeit, d. h. E-Modul zu niedrig;
- Düsenablagerungen, was zu Profitschwankungen führt;
- Walzen ablagerungen vom UV-Stabilisator, was zu Beeinträchtigungen der optischen Eigenschaften (Klebedefekte, inhomogene Oberfläche) führt;
- Ablagerungen in Streck-, Fixierrahmen, die auf die Folie tropfen.

Daher war es mehr als überraschend, dass bereits mit niedrigen Konzentrationen des UV-Stabilisators ein hervorragender UV-Schutz erzielt wurde. Sehr überraschend war, dass sich bei diesem hervorragenden UV-Schutz

- der Gelbwert der Folie im Vergleich zu einer nicht stabilisierten Folie im Rahmen der Meßgenauigkeit nicht ändert;
- sich keine Ausgasungen, keine Düsenablagerungen, keine Rahmenausdampfungen einstellten, wodurch die Folie eine exzellente Optik aufweist und ein ausgezeichnetes Profil und eine ausgezeichnete Planlage hat;
- sich die UV-stabilisierte Folie durch eine hervorragende Streckbarkeit auszeichnet, so dass sie verfahrenssicher und stabil auf high speed film lines bis zu Geschwindigkeiten von 420 m/min produktionssicher hergestellt werden kann.

Die Folie gemäß der Erfindung enthält mindestens ein Flammschutzmittel, das über die sogenannte Masterbatch-Technologie direkt bei der Folienherstellung zudosiert wird, wobei die Konzentration des Flammschutzmittels im Bereich von 0,5 bis 30,0 Gew.-%, vorzugsweise von 1,0 bis 20,0 Gew.-%, bezogen auf das Gewicht der Schicht des kristallisierbaren Thermoplasten, liegt. Bei der Herstellung des Masterbatchs wird im allgemeinen ein Verhältnis von Flammschutzmittel zu Thermoplast im Bereich von 60 zu 40 Gew.-% bis 10 zu 90 Gew.-% eingehalten.

Zu den typischen Flammschutzmitteln gehören Bromverbindungen, Chlorparaffine und andere Chlorverbindungen, Antimontrioxid, Aluminiumtrihydrate , wobei die Halogenverbindungen aufgrund der entstehenden halogenhaltigen Nebenprodukte nachteilig sind. Des Weiteren ist die geringe Lichtbeständigkeit einer damit ausgerüsteten Folie neben der Entwicklung von Halogenwasserstoffen im Brandfall extrem nachteilig.

Geeignete Flammschutzmitteln, die gemäß der Erfindung eingesetzt werden, sind beispielsweise organische Phosphorverbindungen wie Carboxyphosphinsäuren, deren Anhydride und Dimethyl-methylphosphonat. Erfindungswesentlich ist, dass die organische Phosphorverbindung im Thermoplast löslich ist, da andernfalls die geforderten optischen Eigenschaften nicht erfüllt werden.

Da die Flammschutzmittel im allgemeinen eine gewisse Hydrolyseempfindlichkeit aufweisen, kann der zusätzliche Einsatz eines Hydrolysestabilisators sinnvoll sein.

Als Hydrolysestabilisator werden im allgemeinen phenolische Stabilisatoren, Alkali/Erdalkalistearate und/oder Alkali-/Erdalkalicarbonate in Mengen von 0,01 bis 1,0 Gew.-% eingesetzt. Phenolische Stabilisatoren werden in einer Menge von 0,05 bis 0,6 Gew.-%, insbesondere 0,15 bis 0,3 Gew.-% und mit einer Molmasse von mehr als 500 g/mol bevorzugt. Pentaerythrityl-Tetrakis-3-(3,5-di Tertiärbutyl-4-Hydroxyphenyl)-Propionat oder 1,3,5-Trimethyl-2,4,6-tris (3,5-di-Tertärbütyl-4-Hydroxybenzyl)benzol sind besonders vorteilhaft.

Es war überraschend, dass mittels Masterbatch-Technologie, einer geeigneten Vortrocknung und/oder Vorkristallisation und gegebenenfalls Einsatz von geringen Mengen eines Hydrolysestabilisators eine schwerentflammbare Folie mit dem geforderten Eigenschaftsprofil wirtschaftlich und ohne Verklebung im Trockner herstellbar ist und dass die Folie nach Temperaturbelastung nicht versprödet und beim Knicken nicht bricht.

In einer bevorzugten Ausführungsform enthält die erfindungsgemäße Folie als Hauptbestandteil ein kristallisierbares Polyethylenterephthalat, 1 Gew.-% bis 20 Gew.-% einer organischen im Polyethylenterephthalat löslichen organischen Phosphorverbindung (Dimethyl-Methylphosphonat), 0,01 Gew.-% bis 5,0 Gew.-% eines im PET löslichen UV-Stabilisators aus der Gruppe der 2-Hydroxybenzotriazole oder der Triazine und 0,5 Gew.-% bis 25 Gew.-% Titandioxid mit einem Teilchendurchmesser von vorzugsweise 0,10 bis 0,50 $\mu$m. wobei ein Titandioxid vom Rutil-Typ bevorzugt wird. Anstelle von Titandioxid kann auch Bariumsulfat mit einem Teilchendurchmesser von 0,20 bis 1,20 $\mu$m als Weißpigment eingesetzt werden, wobei die Konzentration zwischen 1,0 Gew.% und 25 Gew.-% liegt. In einer bevorzugten Ausführungsform können äuch Mischungen dieser Weißpigmente oder eine Mischung von einem dieser Weißpigmente mit einem anderen eingesetzt werden.

In einer ganz besonders bevorzugten Ausführungsform enthält die erfindungsgemäße Folie 0,01 Gew.-% bis 5,0 Gew.-% 2-(4,6-Diphenyl-1,3,5-triazin-2-yl)-5-(hexyl)oxyphenol der Formel

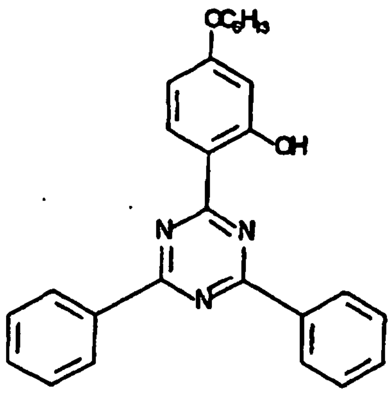

oder 0,01 Gew.-% bis 5,0 Gew.-%2,2-Methylen-bis(6-(2H-benzotriazol-2-yl)-4-(1,1,2,2-tetramethylpropyl)-phenol der Formel

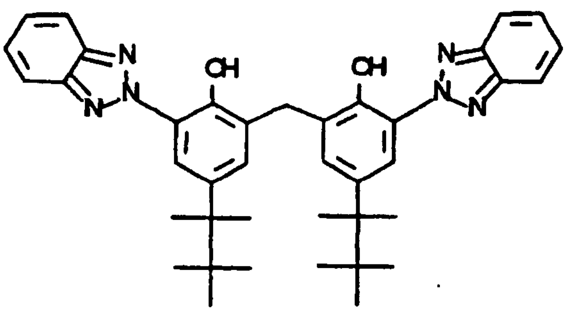

In einer bevorzugten Ausführungsform können auch Mischungen dieser beiden UV-Stabilisatoren oder Mischungen von mindestens einem dieser beiden UV-Stabilisatoren mit anderen UV-Stabilisatoren eingesetzt werden, wobei die Gesamtkonzentration an Lichtschutzmittel vorzugsweise zwischen 0,01 Gew.-% und 5,0 Gew.-%, bezogen auf das Gewicht an kristallisierbarem Polyethylenterephthalat, liegt.

Die weiße, UV-stabilisierte, schwerentflammbare Folie hat folgendes Eigenschaftsprofil:

Der Oberflächenglanz, gemessen nach DIN 67530 (Messwinkel 20°), ist größer als 15, vorzugsweise größer als 20, die Lichttransmission L, gemessen nach ASTM D 1003 beträgt weniger als 70 %, vorzugsweise weniger als 60 %, welches für die erzielte UV-Stabilität in Kombination mit der Schwerentflammbarkeit überraschend gut ist.

Die Standardviskosität SV (DCE) des Polyethylenterephthalats, gemessen in Dichloressigsäure nach DIN 53728, liegt zwischen 600 und 1000, vorzugsweise zwischen 700 und 900.

Die weiße Polyethylenterephthalat-Folie, die mindestens ein anorganisches Weißpigment, einen UV-Stabilisator und ein Flammschutzmittel enthält, kann sowohl einschichtig als auch mehrschichtig sein.

In der mehrschichtigen Ausführungsform ist die Folie aus mindestens einer Kernschicht und mindestens einer Deckschicht aufgebaut, wobei insbesondere ein dreischichtiger A-B-A oder A-B-C Aufbau bevorzugt ist.

Für diese Ausführungsform ist es wesentlich, dass das Polyethylenterephthalat der Kernschicht eine ähnliche Standardviskosität besitzt wie das Polyethylenterephthalat der Deckschicht (en), die an die Kernschicht angrenzt (angrenzen).

In einer besonderen Ausführungsform können die Deckschichten auch aus einem Polyethylennaphthalat-Homopolymeren oder aus einem Polyethylenterephthalat-Polyethylennaphthalat-Copolymeren oder einem Compound bestehen.

In dieser Ausführungsform haben die Thermoplaste der Deckschichten ebenfalls eine ähnliche Standardviskosität wie das Polyethylenterephthalat der Kernschicht.

In der mehrschichtigen Ausführungsform ist der UV-Absorber vorzugsweise in den Deckschichten enthalten. Bei Bedarf kann auch die Kernschicht mit UV-Absorber ausgerüstet sein.

In der mehrschichtigen Ausführungsform ist das Weißpigment und das Flammschutzmittel vorzugsweise in

der Kernschicht enthalten. Jedoch können bei Bedarf auch die Deckschichten mit Weißpigment und/oder Flammschutzmittel ausgerüstet sein.

In einer anderen Ausführungsform können auch Weißpigment, Flammschutzmittel und UV-Absorber in den Deckschichten enthalten sein. Bei Bedarf und hohen Brandschutz-Anforderungen kann die Kernschicht additiv eine sogenannte "Grundausrüstung" an Flammschutzmittel enthalten.

Anders als in der einschichtigen Ausführungsform bezieht sich bei der Mehrschichtfolie die Konzentration des Weißpigmentes, Flammschutzmittels und des UV-Stabilisators auf das Gewicht der Thermoplasten in der ausgerüsteten Schicht.

Die Folie kann auch mindestens einseitig mit einer kratzfesten Beschichtung, mit einem Copolyester oder mit einem Haftvermittler versehen sein.

Ganz überraschend haben Bewitterungsversuche nach derTestspezifikation ISO 4892 mit dem Atlas CI65 Weather Ometer gezeigt, dass es im Falle einer dreischichtigen Folie durchaus ausreichend ist, die 0,5 $\mu$m bis 2 $\mu$m dicken Deckschichten mit UV-Stabilisatoren auszurüsten, um eine verbesserte UV-Stabilität zu erreichen.

Brandversuche nach DIN 4102 Teil 1 und Teil 2 sowie der UL-Test 94 haben ebenso überraschend gezeigt, dass die erfindungsgemäße Folie schon im Dickenbereich von 10-300 $\mu$m die Anforderungen erfüllen.

Dadurch werden die mit der bekannten Koextrusionstechnologie hergestellten schwerentflammbaren, UV-stabilisierten, mehrschichtigen Folien im Vergleich zu den komplett UV-stabilisierten und flammausgerüsteten Monofolien wirtschaftlich extrem interessant, da deutlich weniger Additive für eine vergleichbare Schwerentflammbarkeit und UV-Stabilität benötigt werden.

Bewitterungstests haben ergeben, dass die erfindungsgemäßen schwerentflammbaren, UV-stabilisierten Folien selbst nach 5 bis 7 Jahren (aus den Bewitterungstests hochgerechnet) Außenanwendung im allgemeinen keine erhöhte Vergilbung, keine Versprödung, keinen Glanzverlust der Oberfläche, keine Rißbildung an der Oberfläche und keine Verschlechterung der mechanischen Eigenschaften aufweisen.

Bei der Herstellung der Folie wurde festgestellt, dass sich die schwerentflammbare, UV-stabilisierte Folie hervorragend in Längs-und in Querrichtung ohne Abrisse orientieren läßt. Des Weiteren wurden keinerlei Ausgasungen des UV-Stabilisators oder Flammschutzmittels im Produktionsprozess gefunden, was erfindungswesentlich ist, da die meisten UV-Stabilisatoren und Flammschutzmittel bei Extrusionstemperaturen über 260 °C störende, unangenehme Ausgasungen zeigen und damit untauglich sind.

Bei der Herstellung der weißen, schwerentflammbaren, UV-stabilen Folie wurde weiter festgestellt, dass sich das Flammschutzmittel mittels Masterbatch-Technologie und einer geeigneten Vortrocknung bzw. Vorkristallisation des Flammschutzmasterbatches ohne Verklebungen im Trockner einarbeiten läßt, so dass eine wirtschaftliche Folienproduktion möglich ist.

Messungen ergaben, dass die erfindungsgemäße Folie bei Temperaturbelastungen von 100 °C über einen längeren Zeitraum nicht versprödet. Dieses Resultat ist auf die synergistische Wirkung von geeigneter Vorkristallisation, Vortrocknung, Masterbatch-Technologie und UV-Stabilisatorausrüstung zurückzuführen.

Des Weiteren ist die erfindungsgemäße Folie ohne Umweltbelastung und ohne Verlust der mechanischen Eigenschaften problemlos rezyklierbar, wodurch sie sich beispielsweise für die Verwendung als kurzlebige Werbeschilder für den Messebau und andere Werbeartikel, wo Brandschutz gewünscht wird, eignet.

Die Herstellung der erfindungsgemäßen, weißen, schwerentflammbaren, UV-stabilen Folie kann beispielsweise nach dem Extrusionsverfahren in einer Extrusionsstraße erfolgen.

Besonders bevorzugt ist die Zugabe des Weißpigmentes und des Lichtschutzmittels über die Masterbatch-Technologie. Das Lichtschutzmittei bzw. das Weißpigment wird in einem festen Trägermaterial voll dispergiert. Als Trägermaterialien kommen der Thermoplast selbst, wie z. B. das Polyethylenterephthalat oder auch andere Polymere, die mit dem Thermoplasten ausreichend verträglich sind, in Frage.

Erfindungsgemäß kann der UV-Stabilisator und das Weißpigment bereits beim Thermoplast-Rohstoffhersteller zudosiert werden oder bei der Folienherstellung in den Extruder dosiert werden.

Wichtig bei der Masterbatch-Technologie ist, dass die Korngröße und das Schüttgewicht des Masterbatches ähnlich der Korngröße und dem Schüttgewicht des Thermoplasten ist, so dass eine homogene Verteilung und damit eine homogene UV-Stabilisierung erfolgen kann.

Die Polyesterfolien können nach bekannten Verfahren aus einen Polyesterrohstoff mit ggf. weiteren Rohstoffen, dem Flammschutzmittel, dem Weißpigment, dem UV-Stabilisator und/oder weiteren üblichen Additiven in üblicher Menge von 1,0 bis max. 30 Gew.-% sowohl als Monofolie als auch als mehrschichtige, ggf. koextrudierte Folien mit gleichen oder unterschiedlich ausgebildeten Oberflächen hergestellt werden, wobei eine Oberfläche beispielsweise pigmentiert ist und die andere Oberfläche kein Pigment enthält. Ebenso können eine oder beide Oberflächen der Folie nach bekannten Verfahren mit einer üblichen funktionalen Beschichtung versehen werden.

Erfindungswesentlich ist, dass das Masterbatch, welches das Flammschutzmittel und gegebenenfalls den Hydrolysestabilisator enthält, vorkristallisiert bzw. vorgetrocknet wird. Diese Vortrocknung beinhaltet ein gradielles Erhitzen des Masterbatches unter reduziertem Druck ( 20 bis 80 mbar, vorzugsweise 30 bis 60 mbar, insbesondere 40

bis 50 mbar ) und unter Rühren und gegebenenfalls ein Nachtrocknen bei konstanter, erhöhter Temperatur ebenfalls unter reduziertem Druck. Das Masterbatch wird vorzugsweise bei Raumtemperatur aus einem Dosierbehälter in der gewünschten Abmischung zusammen mit den Polymeren der Basis- und/oder Deckschichten und ggf. anderen Rohstoffkomponenten chargenweise in einem Vakuumtrockner, der im Laufe der Trocken- bzw. Verweilzeit ein Temperaturspektrum von 10 °C bis 160 °C, vorzugsweise 20 °C bis 150 °C, insbesondere 30 °C bis 130 °C durchläuft, gefüllt. Während der ca. 6-stündigen, vorzugsweise 5-stündigen, insbesondere 4-stündigen Verweilzeit wird die Rohstoffmischung mit 10 bis 70 Upm, vorzugsweise 15 bis 65 Upm, insbesondere 20 bis 60 Upm gerührt. Das so vorkristallisierte bzw. vorgetrocknete Rohstoffgemisch wird in einem nachgeschalteten ebenfalls evakuierten Behälter bei 90 bis 180 °C, vorzugsweise 100 °C bis 170 °C, insbesondere 110 °C bis 160 °C für 2 bis 8 Stunden, vorzugsweise 3 bis 7 Stunden, insbesondere 4 bis 6 Stunden nachgetrocknet.

Bei dem bevorzugten Extrusionsverfahren zur Herstellung der Polyesterfolie wird das aufgeschmolzene Polyestermaterial durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und Längsrichtung bzw. in Längs-, in Quer- und nochmals und Längsrichtung und/oder Querrichtung gestreckt. Die Strecktemperaturen liegen im allgemeinen bei $T_G$ + 10 °C bis $T_G$ + 60 °C ($T_G$ = Glastemperatur), das Streckverhältnis der Längsstreckung liegt üblicherweise bei 2 bis 6, insbesondere bei 3 bis 4,5, das der Querstreckung liegt bei 2 bis 5, insbesondere bei 3 bis 4,5 und das der ggf. durchgeführten zweiten Längs- bzw. Querstreckung liegt bei 1,1 bis 5. Die erste Längsstreckung kann ggf. gleichzeitig mit der Querstreckung (Simultanstreckung) durchgeführt werden. Anschließend folgt die Thermofixierung der Folie bei Ofentemperaturen von 180 bis 260 °C, insbesondere bei 220 bis 250 °C. Anschließend wird die Folie abgekühlt und gewickelt.

Es war mehr als überraschend, dass mittels Masterbatch-Technologie, einer geeigneten Vortrocknung bzw. Vorkristallisation eine Folie mit dem geforderten Eigenschaftsprofil wirtschaftlich und ohne Verklebung im Trockner herstellbar ist und dass die Folie nach Temperaturbelastung nicht versprödet.

Sehr überraschend war, dass bei diesem hervorragenden Resultat und dem geforderten Flammschutz und der hohen UV-Stabilität

- der Gelbwert der Folie im Vergleich zu einer nicht ausgerüsteten Folie im Rahmen der Meßgenauigkeit nicht negativ beeinflusst ist,
- keine Ausgasungen, keine Düsenablagerungen, keine Rahmenausdampfungen auftreten, wodurch die Folie eine exzellente Optik aufweist und ein ausgezeichnetes Profil und eine hervorragende Planlage hat,
- sich die schwerentflammbare, UV-stabile Folie durch einen hervorragende Streckbarkeit auszeichnet, so dass sie verfahrenssicher und stabil auf high speed film lines bis zu Geschwindigkeiten von 420m/min produktionssicher hergestellt werden kann. Damit ist eine Folie auch wirtschaftlich rentabel.

Des Weiteren ist sehr überraschend, dass auch das Regenerat wieder einsetzbar ist, ohne den Gelbwert der Folie negativ zu beeinflussen.

Durch die überraschende Kombination ausgezeichneter Eigenschaften eignet sich die erfindungsgemäße Folie hervorragend für eine Vielzahl verschiedener Anwendungen, beispielsweise für Innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium, für Gewächshäuser, Überdachungen, Außenverkleidungen, Abdeckungen, Anwendungen im Bausektor und Lichtwerbeprofile, Schattenmatten, Elektroanwendungen.

Die Erfindung wird im folgenden anhand von Ausführungsbeispielen näher erläutert.

Die Messungen der einzelnen Eigenschaften erfolgt dabei gemäß der folgenden Normen bzw. Verfahren.

## Meßmethoden

### Oberflächenglanz

Der Oberflächenglanz wird bei einem Messwinkel von 20° nach DIN 67530 gemessen.

### Lichttransmission

Unter der Lichttransmission ist das Verhältnis des insgesamt durchgelassenen Lichtes zur einfallenden Lichtmenge zu verstehen.

Die Lichttransmission wird mit dem Messgerät "®HAZEGARD plus" nach ASTM D 1003 gemessen.

### Trübung

Trübung ist der prozentuale Anteil des durchgelassenen Lichtes, der vom eingestrahlten Lichtbündel im Mittel um mehr als 2,5° abweicht. Die Bildschärfe wird unter einem Winkel kleiner 2,5° ermittelt.
Die Trübung wird mit dem Messgerät "HAZEGARD plus" nach ASTM D 1003.

### Oberflächendefekte

Die Oberflächendefekte werden visuell bestimmt.

### Mechanische Eigenschaften

Der E-Modul und die Reißfestigkeit und die Reißdehnung werden in Längs- und Querrichtung nach ISO 527-1-2 gemessen.

### SV (DCE), IV (DVE)

Die Standardviskosität SV (DCE) wird angelehnt an DIN 53726 in Dichloressigsäure gemessen.
Die intrinsische Viskosität (IV) berechnet sich wie folgt aus der Standardviskosität

$$IV\ (DCE) = 6{,}67\ 10^{-4}\ SV\ (DCE) + 0{,}118$$

### Brandverhalten

Das Brandverhalten wird nach DIN 4102 Teil 2, Baustoffklasse B2 und nach DIN 4102 Teil 1, Baustoffklasse B1 sowie nach dem UL-Test 94 ermittelt.

### Bewitterung (beidseitig), UV-Stabilität

Die UV-Stabilität wird nach der Testspezifikation ISO 4892 wie folgt geprüft:

| | |
|---|---|
| Testgerät : | Atlas Ci 65 Weather Ometer |
| Testbedingungen : | ISO 4892, d. h. künstliche Bewitterung |
| Bestrahlungszeit : | 1000 Stunden (pro Seite) |
| Bestrahlung : | 0,5 W/$m^2$, 340 nm |
| Temperatur : | 63 °C |
| Relative Luftfeuchte : | 50 % |
| Xenonlampe : | innerer und äußerer Filter aus Borosilikat |
| Bestrahlungszyklen : | 102 Minuten UV-Licht, dann 18 Minuten UV-Licht mit Wasser Besprühung der Proben dann wieder 102 Minuten UV-Licht usw. |

### Gelbwert

Der Gelbwert (YID) ist die Abweichung von der Farblosigkeit in Richtung "Gelb" und wird gemäß DIN 6167 gemessen.
Bei nachstehenden Beispielen und Vergleichsbeispielen handelt es sich jeweils um weiße Folien unterschiedlicher Dicke, die auf der beschriebenen Extrusionsstraße hergestellt werden.
Alle Folien wurden nach der Testspezifikation ISO 4892 beidseitig je 1000 Stunden pro Seite mit dem Atlas Ci 65 Weather Ometer der Fa. Atlas bewittert und anschließend bezüglich der mechanischen Eigenschaften, dem Gelbwert (YID), der Oberflächendefekte, der Lichttransmission und des Glanzes geprüft.
An allen Folien wurden Brandtests nach DIN 4102, Teil 2 und Teil 1 und nach UL-Test 94 durchgeführt.

### Beispiel 1

Es wird eine 50 µm dicke, weiße Folie hergestellt, die als Hauptbestandteil Polyethylenterephthalat, 7,0 Gew.-% Titandioxid und 1,0 Gew.-% des UV-Stabilisators 2-(4,6-Diphenyl-1,3,5 triazin-2yl)-5-(hexyl) oxyphenol (® Tinuvin

1577 der Firma Ciba-Geigy) und 2,0 Gew.-% Flammschutzmittel enthält. Bei dem Flammschutzmittel handelt es sich um die organische, im PET lösliche Phosphorverbindung Dimethyl-Methylphosphonat (® Amgard P.1045 der Fa. Albright & Wilson)

Das Titandioxid ist vom Rutiltyp, hat einen mittleren Teilchendurchmesser von 0,20 µm und ist mit $Al_2O_3$ gecoatet.

® Tinuvin 1577 hat einen Schmelzpunkt von 149 °C und ist bis ca. 330 °C thermisch stabil.

Zwecks homogener Verteilung wird das Titandioxid und der UV-Absorber direkt beim Rohstoffhersteller in das PET eingearbeitet.

Das Flammschutzmittel wird in Form eines Masterbatches zudosiert. Das Masterbatch setzt sich aus 10 Gew.-% Flammschutzmittel (Dimethyl-Methylphosphonat) und 80 Gew.-% PET zusammen und hat ein Schüttgewicht von 750 $kg/m^3$

Das PET, aus dem die Folie hergestellt wird und das PET, dass zur Masterbatchherstellung benutzt werden, haben eine Standardviskosität SV (DCE) von 810, was einer intrinsischen Viskosität IV (DCE) von 0,658 dl/g entspricht.

50 Gew.-% des Polyethylenterephthalates, 30 Gew.-% Polyethylenterephthalat-Rezyklat und 20 Gew.-% des Masterbatches werden bei Raumtemperatur aus separaten Dosierbehältem in einem Vakuumtrockner gefüllt, der von dem Einfüllzeitpunkt bis zum Ende der Verweilzeit ein Temperaturspektrum von 25 °C bis 130 °C durchläuft. Während der ca. 4-stündigen Verweilzeit wird das Rohstoffgemisch mit 61 Upm gerührt.

Das vorkristallisierte bzw. vorgetrocknete Rohstoffgemisch wird in dem nachgeschalteten, ebenfalls unter Vakuum stehenden Hopper bei 140 °C 4 Stunden nachgetrocknet. Anschließendwird mit dem beschriebenen Extrusionsverfahren die 50 µm Monofolie hergestellt.

Die einzelnen Verfahrensschritte waren:

| | | |
|---|---|---|
| Längsstreckung | Temperatur | 85-135 °C |
| | Längsstreckverhältnis: | 4,0: 1 |
| Querstreckung | Temperatur | 85-135 °C |
| | Querstreckverhältnis: | 4,0: 1 |
| Fixierung | Temperatur | 230 °C |

Die hergestellte weiße PET-Folie hat folgendes Eigenschaftsprofil:

| | |
|---|---|
| Dicke : | 50 µm |
| Oberflächenglanz 1. Seite : | 72 |
| (Messwinkel 20°) 2. Seite : | 68 |
| Lichtransmission : | 28 % |
| Oberflächendefekte pro $m^2$ : | keine |
| E-Modul längs : | 4300 $N/mm^2$ |
| E-Modul quer : | 5600 $N/mm^2$ |
| Reissfestigkeit längs : | 190 $N/mm^2$ |
| Reissfestigkeit quer : | 280 $N/mm^2$ |
| Gelbwert (YID) : | 48 |
| Einfärbung : | homogen |

Die Folie erfüllt nach DIN 4102 Teil 2 und Teil 1 die Baustoffklassen B2 und B1. Die Folie besteht den UL-Test 94.

Nach 200 Stunden Tempern bei 100 °C im Umlufttrocknerschrank sind die mechanischen Eigenschaften unverändert. Die Folie zeigt keinerlei Versprödungserscheinungen.

Nach je 1000 Stunden Bewitterung pro Seite mit dem Atlas Cl 65 Weather Ometer zeigt die PET-Folie folgende Eigenschaften:

| | |
|---|---|
| Dicke : | 50 µm |
| Oberflächenglanz 1. Seite : | 65 |
| (Messwinkel 20°) 2. Seite : | 60 |
| Lichtransmission : | 35 % |
| Oberflächendefekte pro $m^2$ : | keine |
| E-Modullängs : | 4050 $N/mm^2$ |
| E-Modul quer : | 5500 $N/mm^2$ |
| Reissfestigkeit längs : | 151 $N/mm^2$ |

| | |
|---|---|
| Reissfestigkeit quer : | 238 N/mm$^2$ |
| Gelbwert (YID) : | 49 |

**Beispiel 2**

Nach der Koextrusionstechnologie wird eine 17 µm dicke mehrschichtige PET-Folie mit der Schichtreihenfolge A-B-A hergestellt, wobei B die Kemschicht und A die Deckschichten repräsentieren. Die Kernschicht ist 15 µm dick und die beiden Deckschichten, die die Kernschicht überziehen, sind jeweils 1 µm dick.

Das für die Kernschicht B eingesetzte Polyethylenterephthalat ist identisch mit dem aus Beispiel 1, enthält aber keinen UV-Absorber.

Die Kernschicht enthält außerdem 2 Gew.-% Flammschutzmittel (Dimethyl-Methylphosphonat), wobei das Flammschutzmittel in Form eines Masterbatches zudosiert wird. Das Masterbatch setzt sich aus 10 Gew.-% Flammschutzmittel und 90 Gew.-% PET zusammen.

Das PET der Deckschichten hat eine Standardviskosität SV(DCE) von 810 und ist mit 1 Gew.-% Tinuvin 1577 und 0,3 Gew.-% Sylobloc ausgerüstet. Die Deckschichten enthalten kein Titandioxid und kein Flammschutzmittel.

Für die Kernschicht werden 50 Gew.-% Polyethylenterephthalat, 30 Gew.-% Polyethylenterephthalat-Rezyklat und 20 Gew-% des Masterbatches entsprechend Beispiel 1 vorkristallisiert, vorgetrocknet und nachgetrocknet.

Der Deckschichtrohstoff erfährt keine besondere Trocknung. Mittels Koextrusionstechnologie wird eine 17 µm dicke Folie mit der Schichtreihenfolge A-B-A hergestellt, die folgende Eigenschaften zeigt:

| | |
|---|---|
| Schichtaufbau : | A-B-A |
| Gesamtdicke : | 17 µm |
| Oberflächenglanz 1. Seite : | 134 |
| (Messwinkel 20°) 2. Seite : | 128 |
| Lichttransmission : | 48 % |
| Oberflächendefekte (Stippen, Orangenhaut, Blasen) : | keine |
| E-Modul längs : | 4100 N/mm$^2$ |
| E-Modul quer : | 4720 N/mm$^2$ |
| Reissfestigkeit längs : | 180 N/mm$^2$ |
| Reissfestigkeit quer : | 205 N/mm$^2$ |
| Gelbwert (YID) : | 12,9 |
| Einfärbung : | homogen |

Nach 200 Stunden Tempern bei 100 °C im Umlufttrocknerschrank sind die mechanischen Eigenschaften unverändert. Die Folie zeigt keinerlei Versprödungserscheinungen.

Die Folie erfüllt nach DIN 4102 Teil 2 und Teil 1 die Baustoffklasse B2 und B1. Die Folie besteht den UL-Test 94.

Nach je 1000 Stunden Bewitterung pro Seite mit dem Atlas CI 65 Weather Ometer zeigt die PET-Folie folgende Eigenschaften:

| | |
|---|---|
| Schichtaufbau : | A-B-A |
| Gesamtdicke : | 17 µm |
| Oberflächenglanz 1. Seite : | 125 |
| (Messwinkel 20°) 2. Seite : | 115 |
| Lichttransmission : | 45 % |
| Oberflächendefekte (Stippen, Orangenhaut, Blasen) : | keine |
| E-Modul längs : | 3950 N/mm$^2$ |
| E-Modul quer : | 4610 N/mm$^2$ |
| Reissfestigkeit längs : | 150 N/mm$^2$ |
| Reissfestigkeit quer : | 190 N/mm$^2$ |
| Gelbwert (YID) : | 15,1 |
| Einfärbung : | homogen |

**Beispiel 3**

Entsprechend Beispiel 2 wird eine 20 µm A-B-A-Folie hergestellt, wobei die Kernschicht B 16 µm und die Deckschichten A jeweils 2 µm dick sind.

Die Kernschicht B enthält nur 5 Gew.-% des Flammschutz-Masterbatches aus Beispiel 2.

Die Deckschichten sind identisch mit denen aus Beispiel 2, enthalten aber 20 Gew.-% des Flammschutz-Masterbatches, welches in Beispiel 2 nur für die Kernschicht eingesetzt wurde.

Die Rohstoffe und das Masterbatch für die Kernschicht und die Deckschichten werden entsprechend Beispiel 1 vorkristallisiert, vorgetrocknet und nachgetrocknet.

Die mittels Koextrusionstechnologie hergestellt, mehrschichtige 20 μm Folie hat folgendes Eigenschaftsprofil:

| | |
|---|---|
| Schichtaufbau : | A-B-A |
| Gesamtdicke : | 20 μm |
| Oberflächenglanz 1. Seite : | 131 |
| (Messwinkel 20°) 2. Seite : | 125 |
| Lichttransmission : | 42 % |
| Oberflächendefekte (Stippen, Orangenhaut, Blasen) : | keine |
| E-Modul längs : | 4000 $N/mm^2$ |
| E-Modul quer : | 4700 $N/mm^2$ |
| Reissfestigkeit längs : | 180 $N/mm^2$ |
| Reissfestigkeit quer : | 205 $N/mm^2$ |
| Gelbwert (YID) : | 13,1 |

Nach 200 Stunden Tempern bei 100 °C im Umlufttrocknerschrank sind die mechanischen Eigenschaften unverändert. Die Folie zeigt keinerlei Versprödungserscheinungen.

Die Folie erfüllt nach DIN 4102 Teil 2 und Teil 1 die Baustoffklassen B2 und B1. Die Folie besteht den UL-Test 94.

Nach je 1000 Stunden Bewitterung pro Seite mit dem Atlas Cl 65 Weather Ometer zeigt die PET-Folie folgende Eigenschaften:

| | |
|---|---|
| Schichtaufbau : | A-B-A |
| Gesamtdicke : | 20 μm |
| Oberflächenglanz 1. Seite : | 124 |
| (Messwinkel 20°) 2. Seite : | 116 |
| Lichttransmission : | 38 % |
| Oberflächendefekte (Stippen, Orangenhaut, Blasen) : | keine |
| E-Modullängs : | 3800 $N/mm^2$ |
| E-Modul quer : | 4490 $N/mm^2$ |
| Reissfestigkeit längs : | 145 $N/mm^2$ |
| Reissfestigkeit quer : | 170 $N/mm^2$ |
| Gelbwert (YID) : | 16,1 |

**Vergleichsbeispiel 1**

Beispiel 2 wird wiederholt. Die Folie wird aber nicht mit UV-Absorbem und nicht mit Flammschutzmittel-Masterbatch ausgerüstet.

Die gemessenen Eigenschaften der unausgerüsteten Folie sind mit denen ausgerüsteten Folie aus Beispiel 2 vergleichbar.

Die unausgerüstete Folie erfüllt die Tests nach DIN 4102 Teil 1 und Teil 2 sowie den UL-Test 94 nicht.

Nach 1000 Stunden Bewitterung pro Seite mit dem Atlas Cl Weather Ometer weist die Folie an den Oberflächen Risse und Versprödungserscheinungen auf. Ein präzises Eigenschaftsprofil -insbesondere die mechanischen Eigenschaften - kann daher nicht mehr gemessen werden. Außerdem zeigt die Folie eine visuelle sichtbare Gelbfärbung.

**Patentansprüche**

1. Weiße, biaxial orientierte Folie, die als Hauptbestandteil einen kristallisierbaren Thermoplasten enthält, **dadurch gekennzeichnet, dass** sie mindestens einen UV-Stabilisator, mindestens ein Weißpigment und mindestens ein Flammschutzmittel enthält, welches im Thermoplasten löslich ist und über die Masterbatch-Technologie direkt bei der Folienherstellung zudosiert wird und wobei das Masterbatch durch gradielles Erhitzen unter reduziertem Druck und unter Rühren vorbehandelt wurde.

2. Folie nach Anspruch 1, **dadurch gekennzeichnet, dass** sich direkt an das gradielle Erhitzen unter reduziertem Druck und unter Rühren ein Nachtrocknen bei konstanter, erhöhter Temperatur ebenfalls unter reduziertem Druck anschließt.

3. Folie nach Anspruch 1 oder 2, **dadurch gekennzeichnet, dass** die Konzentration des UV-Stabilisators im Bereich von 0,01 bis 5 Gew.-%, bezogen auf das Gewicht des kristallisierbaren Thermoplasten, liegt.

4. Folie nach Anspruch 1 oder 2, **dadurch gekennzeichnet, dass** der UV-Stabilisator ausgewählt ist aus 2-Hydroxybenzotriazolen und/oder Triazinen.

5. Folie nach Anspruch 4, **dadurch gekennzeichnet, dass** der UV-Stabilisator 2-(4,6-Diphenyl-1,3,5-triazin-2-yl)-5-(hexyl)oxy-phenol und/oder 2,2'-Methylen-bis(6-(2H-benzotriazol-2-yl)-4-(1,1,2,2-tetramethylpropyl)-phenol ist.

6. Folie nach einem der Ansprüche 1 bis 5, **dadurch gekennzeichnet, dass** das Flammschutzmittel ausgewählt wird aus einer oder mehreren organischen Phosphorverbindungen, vorzugsweise Dimethyl-Methylphosphonat.

7. Folie nach einem der Ansprüche 1 bis 6, **dadurch gekennzeichnet, dass** die Folie 0.5 bis 30.0 Gew.-% Flammschutzmittel enthält.

8. Folie nach einem der Ansprüche 1-7, **dadurch gekennzeichnet, dass** das Weißpigment ausgewählt ist aus einem oder mehreren der Weißpigmente Titandioxid, Bariumsulfat, Calciumcarbonat, Kaolin und Siliciumdioxid.

9. Folie nach Anspruch 8, **dadurch gekennzeichnet, dass** das Weißpigment Titandioxid ist.

10. Folie nach einem der Ansprüche 1 bis 9, **dadurch gekennzeichnet, dass** das Weißpigment beschichtet ist.

11. Folie nach einem der Ansprüche 1-10, **dadurch gekennzeichnet, dass** das Weißpigment in einer Menge von 0,2-40 Gew.-%, bezogen auf das Gewicht der Polymerschicht, in der das Weißpigment enthalten ist, vorhanden ist.

12. Folie nach einem der Ansprüche 1-11, **dadurch gekennzeichnet, dass** das Weißpigment eine mittlere Teilchengröße von 0,10-0,30 μm besitzt.

13. Folie nach einem der Ansprüche 1-12, **dadurch gekennzeichnet, dass** der Oberflächenglanz, gemessen nach DIN 67530 (Messwinkel 20°), größer als 15 ist.

14. Folie nach einem der Ansprüche 1-13, **dadurch gekennzeichnet, dass** die Lichttransmission, gemessen nach ASTM D 1003, kleiner als 70 % beträgt.

15. Folie nach einem der Ansprüche 1-14, **dadurch gekennzeichnet, dass** der E-Modul, gemessen nach ISO 527-1-2, in Längsrichtung größer als 3200 $N/mm^2$ und in Querrichtung größer als 3500 $N/mm^2$ ist.

16. Folie nach einem der Ansprüche 1-15, **dadurch gekennzeichnet, dass** der kriställisierbare Thermoplast ausgewählt ist aus Polyethylenterephthalat, Polybutylenterephthalat, Polyethylennaphthalat und Mischungen aus einem oder mehreren dieser Thermoplasten.

17. Folie nach Anspruch 16, **dadurch gekennzeichnet, dass** als kristallisierbarer Thermoplast Polyethylenterephthalat verwendet wird.

18. Folie nach Anspruch 17, **dadurch gekennzeichnet, dass** die Folie Rezyklat enthält.

19. Folie nach einem der Ansprüche 1-18, **dadurch gekennzeichnet, dass** sie einen einschichtigen Aufbau aufweist.

20. Folie nach einem der Ansprüche 1-18, **dadurch gekennzeichnet, dass** die Folie eine mehrschichtige Struktur mit mindestens einer Deckschicht und mindestens einer Kernschicht aufweist.

21. Folie nach Anspruch 20, **dadurch gekennzeichnet, dass** die mehrschichtige Struktur zwei Deckschichten und eine zwischen den Deckschichten liegende Kernschicht aufweist.

22. Folie nach Anspruch 20 oder 21, **dadurch gekennzeichnet, dass** mindestens ein UV-Stabilisator in der/den Deckschichten enthalten ist.

23. Folie nach einem der Ansprüche 20-22, **dadurch gekennzeichnet, dass** mindestens ein Weißpigment in der

Basisschicht enthalten ist.

**24.** Folie nach einem der Ansprüche 20-23, **dadurch gekennzeichnet, dass** mindestens ein Flammschutzmittel in der Basisschicht enthalten ist.

**25.** Verwendung einer Folie nach Anspruch 1 als Innenraumverkleidung, als Display, für Schilder, für Schutzverglasungen, im Beleuchtungssektor, im Laden- und Regalbau, als Werbeartikel, Kaschiermedium, für Gewächshäuser, Überdachungen, Außenverkleidungen, Abdeckungen, im Bausektor, als Lichtwerbeprofil, Schattenmatte oder in Elektroanwendungen.

## Claims

**1.** A white, biaxially oriented film in which the principal constituent present is a crystallizable thermoplastic, wherein the film comprises at least one UV stabilizer, at least one white pigment and at least one flame retardant which is soluble in the thermoplastic and is fed directly by way of masterbatch technology during the production of the film, and where the masterbatch was pre-treated by gradual heating at subatmospheric pressure and with agitation.

**2.** The film as claimed in claim 1, wherein the gradual heating at subatmospheric pressure and with agitation is directly followed by post-drying at a constant elevated temperature, likewise at subatmospheric pressure.

**3.** The film as claimed in claim 1 or 2, wherein the concentration of the UV stabilizer is from 0.01 to 5% by weight, based on the weight of the crystallizable thermoplastic.

**4.** The film as claimed in claim 1 or 2, wherein the UV stabilizer has been selected from the group consisting of 2-hydroxybenzotriazoles and/or from the group consisting of triazines.

**5.** The film as claimed in claim 4, wherein the UV stabilizer is 2-(4,6-diphenyl-1,3,5-triazin-2-yl)-5-hexyloxyphenol and/or 2,2'-methylenebis(6-(2H-benzotriazol-2-yl)-4-(1,1,3,3-tetramethylbutyl)phenol.

**6.** The film as claimed in any one of claims 1 to 5, wherein the flame retardant is one or more compounds selected from the group consisting of organic phosphorus compounds, preferably dimethyl methylphosphonate.

**7.** The film as claimed in any one of claims 1 to 6, wherein from 0.5 to 30.0% by weight of flame retardant is present in the film.

**8.** The film as claimed in any one of claims 1 to 7, wherein the white pigment is one or more white pigments selected from the group consisting of titanium dioxide, barium sulfate, calcium carbonate, kaolin and silicon dioxide.

**9.** The film as claimed in claim 8, wherein the white pigment is titanium dioxide.

**10.** The film as claimed in any one of claims 1 to 9, wherein the white pigment has been coated.

**11.** The film as claimed in any one of claims 1 to 10, wherein the amount of white pigment present, based on the weight of the polymer layer in which the white pigment is present, is from 0.2 to 40% by weight.

**12.** The film as claimed in any one of claims 1 to 11, wherein the average particle size of the white pigment is from 0.10 to 0.30 μm.

**13.** The film as claimed in any one of claims 1 to 12, wherein the surface gloss, measured to DIN 67530 (measurement angle 20°), is above 15.

**14.** The film as claimed in any one of claims 1 to 13, wherein the luminous transmittance, measured to ASTM D 1003, is below 70%.

**15.** The film as claimed in any one of claims 1 to 14, wherein the modulus of elasticity, measured to ISO 527-1-2, is above 3200 $N/mm^2$ longitudinally and above 3500 $N/mm^2$ transversely.

**16.** The film as claimed in any one of claims 1 to 15, wherein the crystallizable thermoplastic has been selected from the group consisting of polyethylene terephthalate, polybutylene terephthalate, polyethylene naphthalate and mixtures made from one or more of these thermoplastics.

**17.** The film as claimed in claim 16, wherein the crystallizable thermoplastic used comprises polyethylene terephthalate.

**18.** The film as claimed in claim 17, wherein recycled material is present in the film.

**19.** The film as claimed in any one of claims 1 to 18, wherein the film has a single-layer structure.

**20.** The film as claimed in any one of claims 1 to 18, wherein the film has a structure of more than one layer with at least one outer layer and with at least one core layer.

**21.** The film as claimed in claim 20, wherein the structure of more than one layer has two outer layers and a core layer lying between the outer layers.

**22.** The film as claimed in claim 20 or 21, wherein at least one UV stabilizer is present in the outer layer(s).

**23.** The film as claimed in any one of claims 20 to 22, wherein at least one white pigment is present in the base layer.

**24.** The film as claimed in any one of claims 20 to 23, wherein at least one flame retardant is present in the base layer.

**25.** The use of a film as claimed in claim 1 as interior decoration, as a display, for placards, for protective glazing, in the lighting sector, in the fitting out of shops or of stores, as a promotional requisite or laminating medium, for greenhouses, roofing systems, exterior cladding, protective coverings, in the construction sector, as an illuminated advertising profile or a blind, or in electrical applications.

## Revendications

**1.** Film blanc, orienté biaxialement, qui contient comme composant principal une matière thermoplastique cristallisable, **caractérisé en ce qu'**il contient au moins un stabilisant UV, au moins un pigment blanc et au moins un agent ignifuge qui est soluble dans la matière thermoplastique et, lors de la fabrication du film, est ajouté directement par la technique du mélange-maître (*masterbatch*) et le mélange-maître ayant été prétraité par chauffage graduel sous pression réduite et sous agitation.

**2.** Film selon la revendication 1, **caractérisé en ce que** le chauffage graduel sous pression réduite et sous agitation est immédiatement suivi d'un post-séchage à température élevée constante, également sous pression réduite.

**3.** Film selon la revendication 1 ou 2, **caractérisé en ce que** la concentration du stabilisant UV se situe dans la plage allant de 0,01 à 5 % en poids, par rapport au poids de la matière thermoplastique cristallisable.

**4.** Film selon la revendication 1 ou 2, **caractérisé en ce que** le stabilisant UV est choisi parmi les 2-hydroxybenzotriazols et/ou les triazines.

**5.** Film selon la revendication 4, **caractérisé en ce que** le stabilisant UV est le 2-(4,6-diphényl-1,3,5-triazin-2-yl)-5-(hexyl)oxyphénol et/ou le 2,2'-méthylènebis(6-(2H-benzotriazol-2-yl)-4-(1,1,2,2-tétraméthylpropyl)phénol.

**6.** Film selon l'une quelconque des revendications 1 à 5, **caractérisé en ce que** l'agent ignifuge est choisi parmi un ou plusieurs composés phosphorés organiques, le méthylphosphonate de diméthyle étant préféré.

**7.** Film selon l'une quelconque des revendications 1 à 6, **caractérisé en ce que** le film contient de 0,5 à 30,0 % en poids d'agent ignifuge.

**8.** Film selon l'une quelconque des revendications 1 à 7, **caractérisé en ce que** le pigment blanc est choisi parmi un ou plusieurs des pigments blancs dioxyde de titane, sulfate de baryum, carbonate de calcium, kaolin et dioxyde de silicium.

**9.** Film selon la revendication 8, **caractérisé en ce que** le pigment blanc est le dioxyde de titane.

**10.** Film selon l'une quelconque des revendications 1 à 9, **caractérisé en ce que** le pigment blanc est enrobé.

**11.** Film selon l'une quelconque des revendications 1 à 10, **caractérisé en ce que** le pigment blanc est présent en une proportion de 0,2 à 40 % en poids, par rapport au poids de la couche de polymère dans laquelle est contenu le pigment blanc.

**12.** Film selon l'une quelconque des revendications 1 à 11, **caractérisé en ce que** le pigment blanc a une taille moyenne de particule de 0,10 à 0,30 μm.

**13.** Film selon l'une quelconque des revendications 1 à 12, **caractérisé en ce que** le brillant superficiel, mesuré selon la norme DIN 67530 (angle de mesure 20°) est supérieur à 15.

**14.** Film selon l'une quelconque des revendications 1 à 13, **caractérisé en ce que** la transmission de la lumière, mesurée selon ASTM D 1003, est inférieure à 70 %.

**15.** Film selon l'une quelconque des revendications 1 à 14, **caractérisé en ce que** le module d'élasticité, mesuré selon ISO 527-1-2, est supérieur à 3 200 $N/mm^2$ dans le sens longitudinal et supérieur à 3 500 $N/mm^2$ dans le sens transversal.

**16.** Film selon l'une quelconque des revendications 1 à 15, **caractérisé en ce que** la matière thermoplastique cristallisable est choisie parmi le poly(éthylène téréphtalate), le poly(butylène téréphtalate), le poly(éthylène naphtalate) et des mélanges d'un ou plusieurs de ces matières thermoplastiques.

**17.** Film selon la revendication 16, **caractérisé en ce que** du poly(éthylène téréphtalate) est utilisé en tant que matière thermoplastique cristallisable.

**18.** Film selon la revendication 17, **caractérisé en ce que** le film comprend un produit recyclé.

**19.** Film selon l'une quelconque des revendications 1 à 18, **caractérisé en ce qu'**il présente une structure monocouche.

**20.** Film selon l'une quelconque des revendications 1 à 18, **caractérisé en ce que** le film présente une structure multicouche comportant au moins une couche de recouvrement et au moins une couche centrale.

**21.** Film selon la revendication 20, dans lequel la structure multicouche comporte deux couches de recouvrement et une couche centrale située entre les couches de recouvrement.

**22.** Film selon la revendication 20 ou 21, **caractérisé en ce qu'**au moins un stabilisant UV est contenu dans la/les couche(s) de recouvrement.

**23.** Film selon l'une quelconque des revendications 20 à 22, **caractérisé en ce qu'**au moins un pigment blanc est contenu dans la couche de base.

**24.** Film selon l'une quelconque des revendications 20 à 23, **caractérisé en ce qu'**au moins un agent ignifuge est contenu dans la couche de base.

**25.** Utilisation d'un film selon la revendication 1, comme habillage intérieur, comme afficheur, pour des panneaux, pour des vitrages de protection, dans le secteur de l'éclairage, dans l'agencement de magasins et d'étals, comme article publicitaire, matériau de contre-collage, pour des serres, des toitures, des habillages extérieurs, des couvertures, dans le secteur du bâtiment, comme profilé publicitaire lumineux, mat d'ombrage ou dans des applications électriques.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0620245 A
- DE 2346787 A
- EP 0044515 A
- EP 0078633 A